# EUROPEAN PATENT APPLICATION

(11) **EP 1 304 559 A1**
(43) Date of publication of application: **23.04.2003**
(21) Application number: 02023368.0
(22) Date of filing: 18.10.2002
(51) Int. Cl.: G01N 21/53, G01N 21/03, G01N 21/82

(54) **Device for detecting the presence of chlorine in dialysis machines**

(30) Priority: 19.10.2001 IT BO20010644
(71) Applicant: Tecnologie Dinamiche S.A.S. di Rossi Vincenzo & C., 40132 Bologna (IT)
(72) Inventor: Rossi, Vincenzo, 40012 Calderara di Reno (IT)
(74) Representative: Cerbaro, Elena, Dr.

(57) **Abstract**

A device (10) for detecting the presence of chlorine in a fluid channeled along a conduit (16) forming part of a hemodialysis machine, the device (10) having:
- a photoemitting diode (18) for emitting a light beam;
- a photoreceiving diode (23) for at least partly receiving the light beam emitted by the photoemitting diode (18);
the conduit (16) being at least partly transparent to the light beam;
and also having an electronic central control unit (24) for measuring transmittance in the fluid channeled along the conduit (16), so as to determine the chlorine content of the fluid on the basis of the transmittance value. The device (10) may be used, in particular, on a dialysis machine.

## Description

The present invention relates to a device for detecting the presence of chlorine in a fluid channeled along a conduit forming part of a hemodialysis machine.

The present invention also relates to a dialysis machine comprising at least one device for detecting the presence of chlorine in at least one portion of the dialysis circuit.

Though frequent reference is made herein to the use of such a device in a dialysis machine, it is understood that it may be used in any purification system employing, in particular, hypochlorite, as for example a swimming-pool water purification system. In addition to hypochlorite, the device according to the present invention also provides for detecting the presence of any sterilizing agent.

As is known, some dialysis machine component parts are disposable, while others are used repeatedly and must therefore be disinfected after each dialysis treatment.

This is normally done by flushing the dialysis machine with a hypochlorite-base fluid.

After disinfecting the nondisposable parts of the dialysis machine, however, further washing is required to remove any traces of the disinfecting fluid. In this regard, it should be stressed that accidental injection of a solution containing a chlorine concentration of over 5 microliters/liter may prove extremely harmful to the patient.

At present, no provision is made for detecting the presence of chlorine, which is entrusted to the operator who, from experience, knows the post-disinfection wash time required to remove all traces of hypochlorite deposited on the walls of the dialysis circuit during disinfection.

In more advanced dialysis machines, greater precision is obviously required in measuring the amount of hypochlorite present in the fluids.

To this end, according to the present invention there is provided a device for detecting the presence of chlorine in a fluid channeled along a conduit, the device being characterized by comprising:
- emitting means for emitting a light beam; and
- receiving means for at least partly receiving said light beam emitted by said emitting means;
said conduit being at least partly transparent to said light beam;
and by also comprising electronic means for measuring transmittance in said fluid channeled along said conduit, so as to determine the chlorine content of said fluid on the basis of the value of said transmittance.

According to the present invention a dialysis machine is further provided, characterized by comprising at least one device for detecting the presence of chlorine in a fluid channeled along a conduit, and which is the main object of the present invention.

A non-limiting embodiment of the present invention will be described by way of example with reference to the accompanying drawings, in which:
Figure 1 shows an assembly drawing of a device for detecting the presence of chlorine in a fluid channeled along a conduit, in accordance with the invention;
Figure 2 shows a partial section of the Figure 1 assembly drawing, with parts removed for clarity;
Figure 3 shows an operating block diagram of the elements of the device according to the present invention.

Number 10 in the accompanying drawings indicates a device in accordance with the present invention.

As stated, device 10 may be used to advantage, for example, in a dialysis machine not shown.

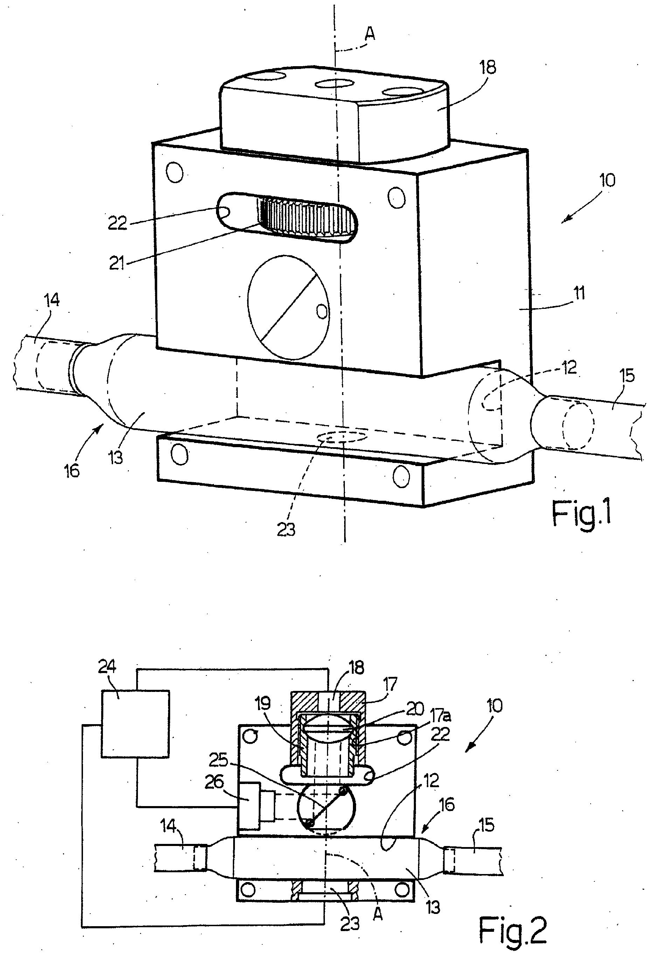

Device 10 comprises a casing 11 (Figure 1) housing and/or supporting the functional elements.

Casing 11 has a recess 12 housing a control vessel 13 made of transparent material, preferably glass (Figure 2).

A tube 14, 15 is connected by conventional means (not shown) to each end of control vessel 13.

Control vessel 13 and tubes 14, 15 together define a conduit 16.

As shown in more detail in Figure 2, casing 11 supports a flange 17 for supporting a photoemitting diode 18. More specifically, flange 17 rests on casing 11 and is fixed to it by screws (not shown).

Flange 17 has a threaded cavity 17a into which is screwed a bush 19 supporting a lens 20. The outer surface of bush 19 is also threaded to engage cavity 17a of flange 17 as required.

The bottom end of bush 19 is fitted with a ring nut 21 shown only in Figure 1.

Casing 11 has an opening 22 through which the operator's fingers can be inserted to rotate ring nut 21 about an axis A to adjust the axial position of lens 20 which, as stated, is integral with bush 19. More specifically, ring nut 21 is rotated by the operator to ensure the light beam emitted by photoemitting diode 18 always strikes the outer surface of vessel 13, for the reasons explained later on.

As shown in Figure 2, a photoreceiving diode 23 is located on the opposite side of control vessel 13 to photoemitting diode 18.

The amount of light received by photoreceiving diode 23 measures transmittance of the light beam in the fluid flowing along conduit 16.

In other words, the amount of light received by photoreceiving diode 23 measures absorbance of the hypochlorite dissolved in the fluid.

The transmittance (absorbance) value readings of photoreceiving diode 23 are sent to an electronic central control unit 24, by which they are processed to determine the chlorine content of the solution.

For example, if device 10 is installed on a dialysis machine (not shown) and detects a chlorine concentration above a given threshold (e.g. 2 microliters/liter), central control unit 24 stops the dialysis machine and sounds an alarm so that immediate action can be taken by the operator.

A mirror 25, advantageously at an angle of 45°, is located between photoemitting diode 18 and control vessel 13 to deflect a small percentage (about 2%) of the incident light onto an auxiliary photoreceiver 26 connected electrically to electronic central control unit 24. The other 98% of the incident light on mirror 25 passes through it, and through the chlorine-containing fluid flowing inside control vessel 13, to photoreceiving diode 23, as required.

The 2% light deflected onto auxiliary photoreceiver 26 and processed by electronic central control unit 24 serves to determine the power actually emitted by photoemitting diode 18, and to feedback control the power setting. Substantially, a given light power to be emitted by photoemitting diode 18 having been set, auxiliary photoreceiver 26 checks the power actually emitted by photoemitting diode 18 equals the power setting, and, if it does not, corrects it accordingly together with electronic central control unit 24.

As stated, lens 20 has an adjustment system defined by bush 19 screwed into supporting flange 17, and by ring nut 21 integral with the bush, and which serves to focus the light beam on the outer surface of control vessel 13 regardless of the transverse dimension of vessel 13. In other words, if for any reason a control vessel 13 smaller in diameter than the height of recess 12 is used, the operator, to obtain reliable chlorine concentration readings, must ensure the light beam is focused at all times on the surface of control vessel 13, by moving lens 20 in the direction of axis A by means of ring nut 21.

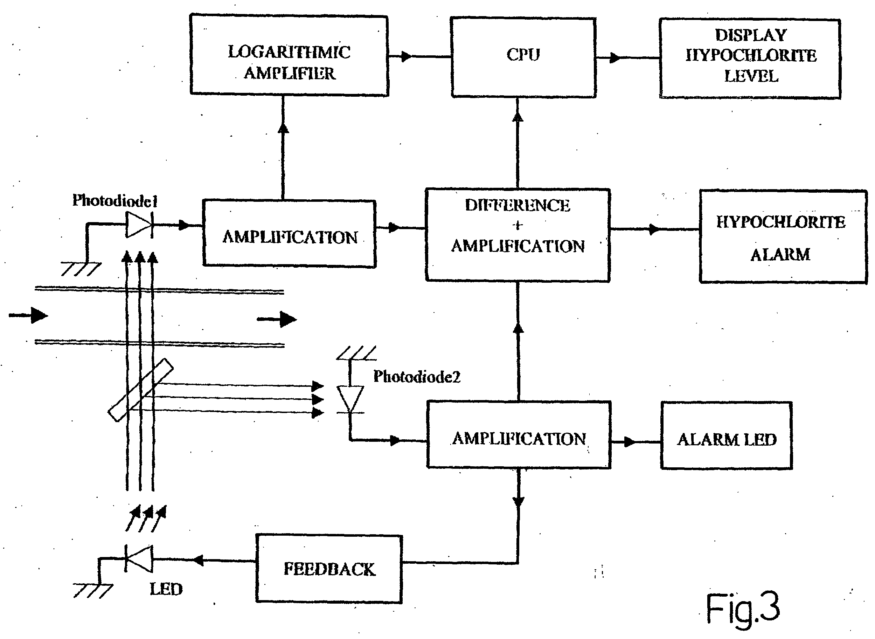

Figure 3 shows, schematically, operation of the various elements of device 10.

In addition to a white-light beam, the chlorine quantity can also be measured using coherent monochromatic light with a given wavelength better suited to the purpose.

The main advantage of device 10 according to the present invention lies in it being noninvasive, i.e. not coming into contact with the fluid being checked, and therefore not requiring disinfection after use.

## Claims

1. A device (10) for detecting the presence of chlorine, or other sterilizing product, in a fluid channeled along a conduit (16), the device (10) being **characterized by** comprising:
- emitting means (18) for emitting a light beam; and
- receiving means (23) for at least partly receiving said light beam emitted by said emitting means (18);
said conduit (16) being at least partly transparent to said light beam;
and by also comprising electronic means (24) for measuring transmittance in said fluid channeled along said conduit (16), so as to determine the chlorine content of said fluid on the basis of the value of said transmittance.

2. A device (10) as claimed in Claim 1, and also comprising a lens (20) for focusing said light beam.

3. A device (10) as claimed in Claim 2, wherein said lens (20) has adjusting means for adjusting the distance of the lens from the wall of said conduit (16) in relation to the diameter of the conduit (16).

4. A device (10) as claimed in any one of the foregoing Claims, wherein a portion of said light beam is deflected onto auxiliary means (26) for determining whether the power actually emitted by said emitting means (18) equals the set power; conversely, the power emitted by said emitting means (18) is corrected accordingly by said electronic means (24).

5. A device (10) as claimed in Claim 4, wherein said light beam is deflected onto said auxiliary means (26) by a mirror (25) positioned advantageously at 45° with respect to the direction of said light beam.

6. A dialysis machine, **characterized by** comprising at least one device (10) as claimed in Claims 1 to 5.

7. A dialysis machine as claimed in Claim 6, wherein, upon said device (10) detecting a chlorine concentration above a given threshold, an electronic central control unit (24) stops the dialysis machine and sounds an alarm.
